# EUROPÄISCHE PATENTSCHRIFT

(11) **EP 0 754 884 B1**
(45) Veröffentlichungstag und Bekanntmachung des Hinweises auf die Patenterteilung: **15.09.1999**
(21) Anmeldenummer: 95117755.9
(22) Anmeldetag: 10.11.1995
(51) Int. Cl.: F16H 59/02

(54) **Schaltvorrichtung für ein automatisches Getriebe in einem Kraftfahrzeug**
Shift control unit for an automatic transmission in an automotive vehicle
Dispositif de commande de changement de rapport pour transmission dans un véhicule automobile

(30) Priorität: 17.07.1995 DE 19526059
(43) Veröffentlichungstag der Anmeldung: 22.01.1997
(73) Patentinhaber: Lemförder Metallwaren AG, 49448 Lemförde (DE)
(72) Erfinder: Ersoy, Metin, Dr.-Ing., D-65396 Walluf (DE)

(56) Entgegenhaltungen:
- EP-A- 0 624 741
- DE-A- 3 717 675
- DE-A- 3 807 881
- DE-A- 4 217 773
- DE-C- 4 426 207

## Beschreibung

Die Erfindung bezieht sich auf eine Schaltvorrichtung für ein automatisches Getriebe in einem Kraftfahrzeug nach dem Oberbegriff des Patentanspruches 1.

Eine Schaltvorrichtung mit diesen Merkmalen ist aus der EP 0 624 741 -A1- bekannt. Hiernach wird der Schalthebel durch eine Feder ständig in Querrichtung belastet und in den Schaltstellungen P, R und N gegen Rastungen der Schaltkulisse gehalten. In der dem automatischen Schalten zugeordneten Schaltstellung D befindet sich der Schalthebel zwischen zwei elastischen Plattenelementen, die je mit einem elektrischen Schalter zusammenwirken, so daß durch eine Bewegung des Schalthebels in einer besonderen Gasse innerhalb der Schaltkulisse eine manuelle Schaltung der Gänge in der einen oder anderen Richtung möglich ist. Dabei bewegt sich der Schalthebel in einer seitlich neben der Hauptgasse liegenden Seitengasse, wie es an sich auch aus der DE 37 17 675 -C2- oder der DE 38 07 881 -C2- und anderen Druckschriften bekannt ist. Eine Schaltvorrichtung für ein automatisches Getriebe mit einer manuellen Gangwähleinrichtung mit nur einer einzigen, im wesentlichen geradlinigen Schaltgasse in der Schaltkulisse ergibt sich auf der DE 40 05 588 -C2-.

Der Erfindung liegt demgegenüber die Aufgabe zugrunde, eine Schaltvorrichtung der eingangs genannten Gattung in der Weise weiterzubilden, daß der automatische Schaltbereich und die manuelle Schaltung eindeutig voneinander getrennt sind.

Zur Lösung dieser Aufgabe wird erfindungsgemäß eine Ausbildung der eingangs genannten Schaltvorrichtung entsprechend dem Kennzeichen des Patentanspruches 1 vorgeschlagen.

Gegenüber bekannten Schaltvorrichtungen für automatische Getriebe mit manueller Gangwähleinrichtung erfolgt durch die Erfindungsmerkmale die Anwahl der dem automatischen Schalten zugeordneten Fahrstufen über das Zwischenteil durch Verschwenken des Wählhebels in der Schaltkulisse und die manuelle Anwahl eines Getriebeganges durch Verschwenkung des Wählhebels gegenüber dem Zwischenteil. Es werden somit für die Anwahlbewegungen der dem automatischen Schalten zugeordneten Schaltstellungen einerseits und für die Bewegungen zur manuellen Schaltung einer Gangstufe andererseits unterschiedliche Bauteile um unterschiedliche Schwenkachsen relativ zueinander bewegt. Vorzugsweise ist der Wählhebel in der dem automatischen Schalten zugeordneten Schaltstellung in der Schaltkulisse schwenkbeweglich arretiert und greift mit seinem unteren Ende in einen Gleitstein des Zwischenteils quer zur Richtung der Wählbewegung ein, um eine Schwenkbewegung des Wählhebels gegenüber dem Zwischenteil zu ermöglichen. Für das Zwischenteil empfiehlt sich eine bügelförmige Ausbildung, so daß der Bügel mit seinen Schenkeln um die Wählachse schwenkbar an einem festen Gehäuse gelagert werden kann, wobei der Bügel in seinem die Schenkel am oberen Ende miteinander verbindenden Steg einen Schlitz aufweist, der sich quer zur Wählbewegung erstreckt und von dem Wählhebel durchgriffen wird, der mit seinem unteren Ende unterhalb der Wählachse in einen sich quer zur Wählbewegung erstreckenden Schlitz eines mit dem Bügel verbundenen Gleitsteins eingreift. In der dem automatischen Schalten zugeordneten Schaltstellung greift der Wählhebel mit seinem unteren Ende in einen Querschlitz des Gleitsteines ein, so daß der um seine schwenkbewegliche Arretierung im Querschlitz des Bügelsteges schwenkbare Wählhebel mit seinem unteren Ende in dem Querschlitz gegenüber dem Bügel beweglich ist.

In der Zeichnung ist ein Ausführungsbeispiel der erfindungsgemäßen Ausbildung teilweise schematisch dargestellt. Es zeigen:
- Figur 1: einen vertikalen Längsschnitt durch eine Schaltvorrichtung mit den Erfindungsmerkmalen,
- Figur 2: einen gegenüber Figur 1 um 90° versetzten Querschnitt,

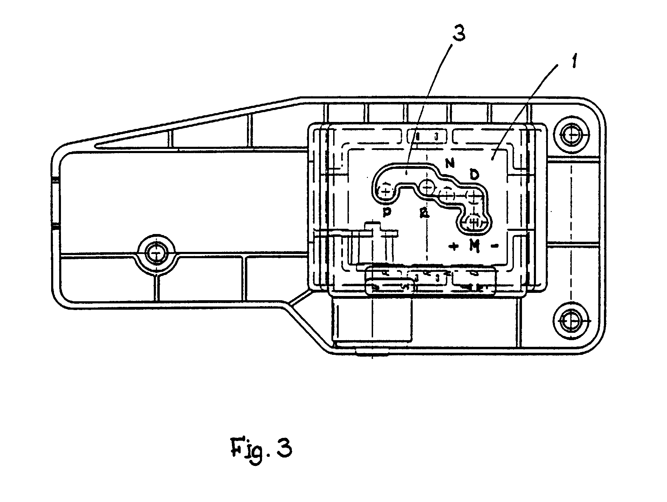

- Figur 3: eine Draufsicht auf das Gehäuse der Schaltvorrichtung ohne Wählhebel,
- Figur 4: einen Querschnitt entsprechend Figur 2 durch ein abgeändertes Ausführungsbeispiel,
- Figur 5: eine Darstellung der Anordnung in Figur 4, teilweise in Seitenansicht und teilweise im Schnitt durch das Gehäuse in Kippstellung des Wählhebels und
- Figur 6: eine perspektivische Darstellung einer vereinfachten Ausführungsform der Ausbildung nach den Figuren 4 und 5.

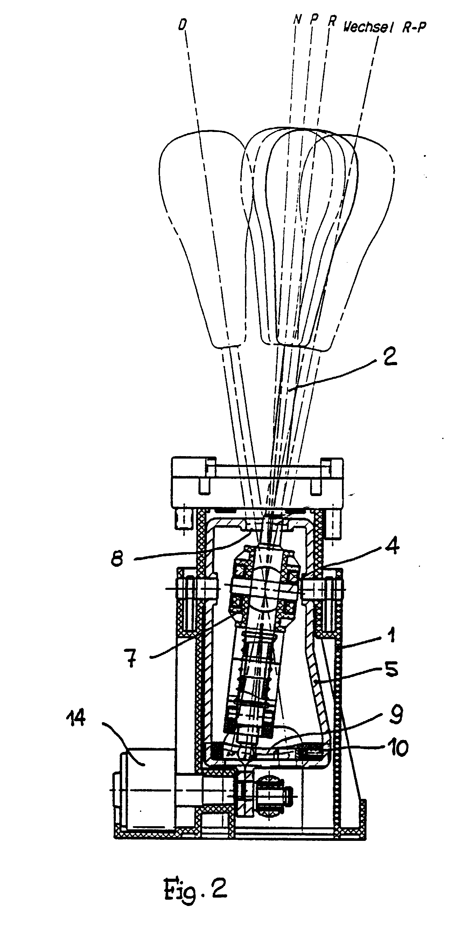

Die Schaltvorrichtung ist in einem domartigen Gehäuse 1 angeordnet, welches auf eine Öffnung eines Getriebetunnels oder dergleichen aufsetzbar ist. Der Wählhebel 2 durchsetzt eine an der Oberseite des Gehäuses 1 angeordnete, stufenförmige Schaltkulisse 3 und ist unterhalb dieser Schaltkulisse 3 um eine Querachse 4 in einem Zwischenteil 5 beweglich gelagert, welches seinerseits um eine koaxial zu der Querachse angeordnete Schwenkachse 6 beweglich in dem domartigen Gehäuse 1 gelagert ist. Zur Lagerung des Wählhebels 2 in dem Zwischenteil 5 ist ein Kreuzstück 7 aus einem begrenzt elastischen Werkstoff vorgesehen, so daß der Wählhebel 2 gegenüber dem Zwischenteil 5 in vorbestimmbaren Grenzen kardanisch beweglich ist. Um eine Kippbewegung des Wählhebels 2 gegenüber der Wählachse des Kreuzstückes 7 zu ermöglichen, kann auch eine Gummilagerung zwischen dem Wählhebel 2 und einem Kreuzstück 7 vorgesehen sein, wobei diese Gummilagerung eventuell Ausnehmungen aufweist, um in einer Achsrichtung des Kreuzstückes eine weichere Gestaltung zu erreichen als in der anderen Achsrichtung. Anstelle einer solchen elastischen Verbindung zwischen dem Wählhebel 2 und dem Kreuzstück 7 können auch andere Federelemente, insbesondere mechanische Federn, eingesetzt werden, so daß bei der Kippbewegung des Wählhebels zusammen mit dem Zwischenteil 5 Rückstellkräfte für die selbsttätige Rückkehr in die Mittellage aufgebaut werden. Eine Schenkelfeder 13 drückt den Wählhebel 2 in den Schaltstellungen P, R, N und D einseitig gegen Rastungen, die durch die stufenförmige Ausbildung der Schaltkulisse 3 gebildet sind. Das Zwischenteil 5 ist in dem Beispiel bügelförmig ausgebildet, so daß es mit den beiden parallel zueinander verlaufenden Schenkeln um die Schwenkachse 6 beweglich im Gehäuse 1 gelagert ist. In dem die Schenkel an der Oberseite miteinander verbindenden Steg ist ein sich quer zur Längsrichtung der Schaltkulisse 3 erstreckender Schlitz 8 vorgesehen, den ein stangenförmiger Teil des Wählhebels 2 mit einem geringen Spiel in Längsrichtung der Schaltkulisse 3 durchsetzt. Das untere Ende des Wählhebels 2 greift in einen Kreuzschlitz 9 eines Gleitsteines 10 ein, der mit den unteren freien Schenkelenden des Zwischenteiles 5 fest verbunden ist. Der Einbau der Schaltvorrichtung erfolgt in herkömmlicher Weise so, daß die Schwenkbewegung des Wählhebels 2 zur Anwahl der Schaltstellungen P, R, N und D im wesentlichen in einer sich in Längsrichtung des Fahrzeuges erstreckenden Ebene erfolgt. Die manuelle Anwahl einer Gangstufe erfolgt durch die schwenkbewegliche Arretierung des Wählhebels in der Schaltkulisse 3 in der Schaltstellung D durch eine leichte seitliche Schwenkbewegung des Wählhebels 2 in Querrichtung bis in die Nebenschaltstellung M und anschließender Bewegung in Richtung der einzigen Schaltgasse. Bei der Anwahl der Schaltstellungen P, R, N, D wird das Zwischenteil 5 von dem Wählhebel 2 mitgenommen und um die Schwenkachse 6 verschwenkt, wobei diese Schwenkbewegungen des Zwischenteils in herkömmlicher Weise über Gestänge, Seilzüge 11 oder dergleichen, die gelenkig mit dem Zwischenteil 5 verbunden sind, übertragen werden können. In der dem manuellen Schalten zugeordneten Nebenschaltstellung M wird das Zwischenteil 5 durch einen Elektromagneten 14 arretiert, so daß bei einer Bewegung des Wählhebels 2 in einer Ebene parallel zur Längsrichtung der Schaltkulisse 3 eine Verschwenkung des Wählhebels 2 um die Achse 6 gegenüber dem Zwischenteil 5 erfolgt, wie es in der Figur 2 zeichnerisch dargestellt ist. Diese Schwenkbewegung wird durch den Kreuzschlitz 9 in dem Gleitstein 10 ermöglicht und dient zur Herstellung von Schaltkontakten für die manuell ausgelöste Umschaltung in eine nächsthöhere oder nächstniedere Gangstufe, wie es an sich bekannt ist.

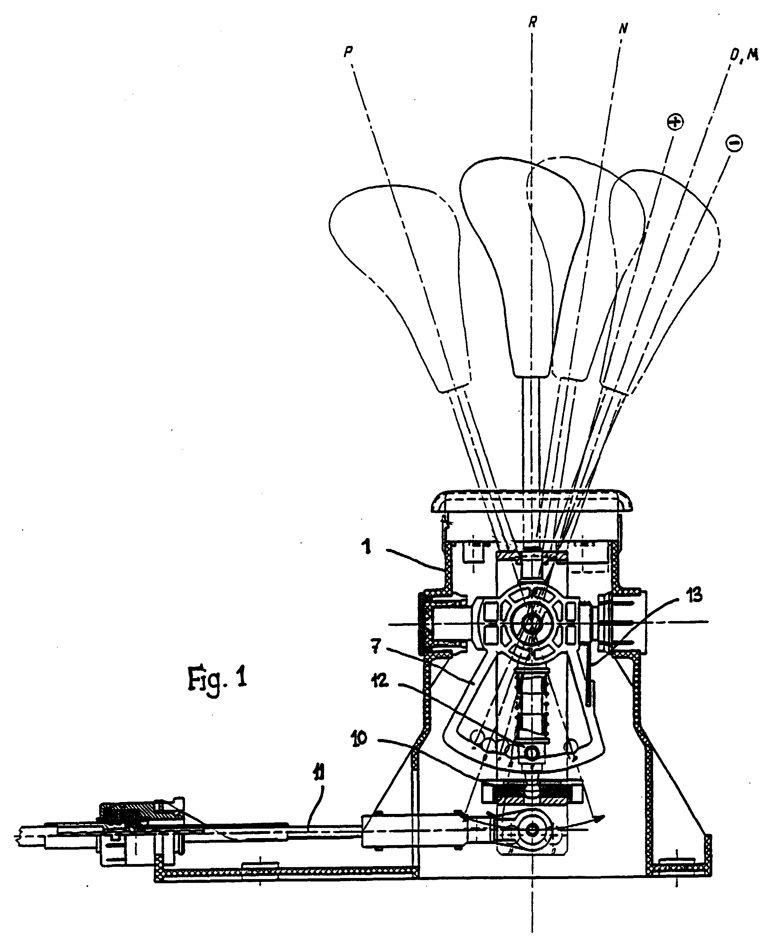

In der Figur 1 ist außerdem dargestellt, daß für die Schaltstellungen P, R. N und D mit der Schaltnebenstellung M in einem Bauteil 12 zusätzliche Rastungen mit einer Federbelastung angeordnet sein können.

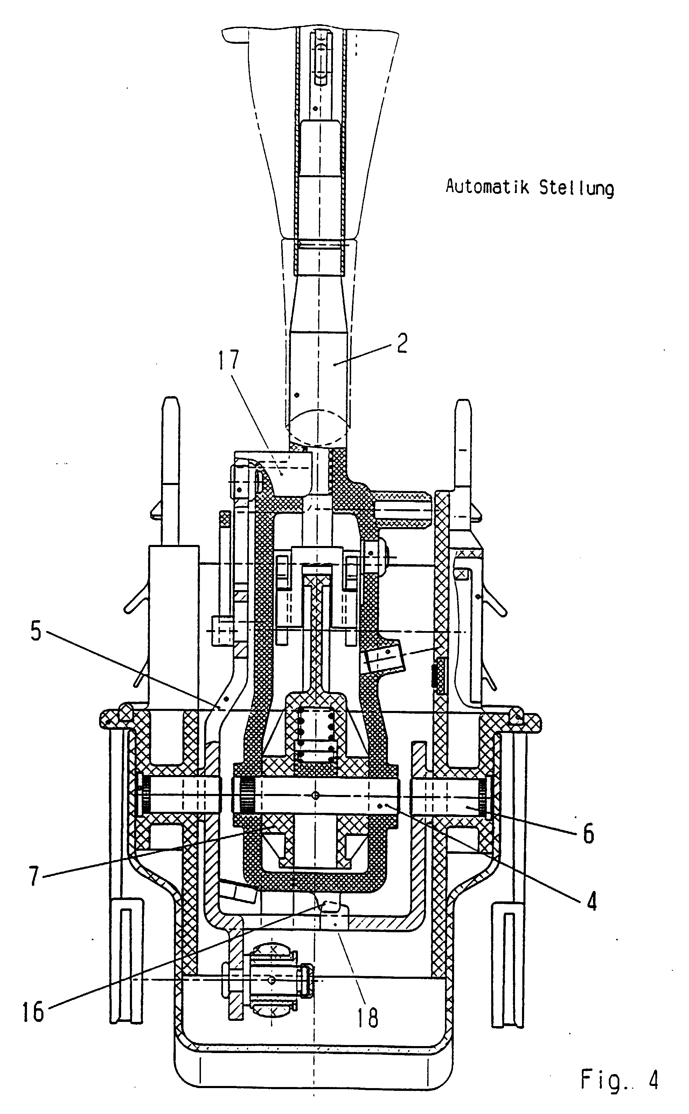

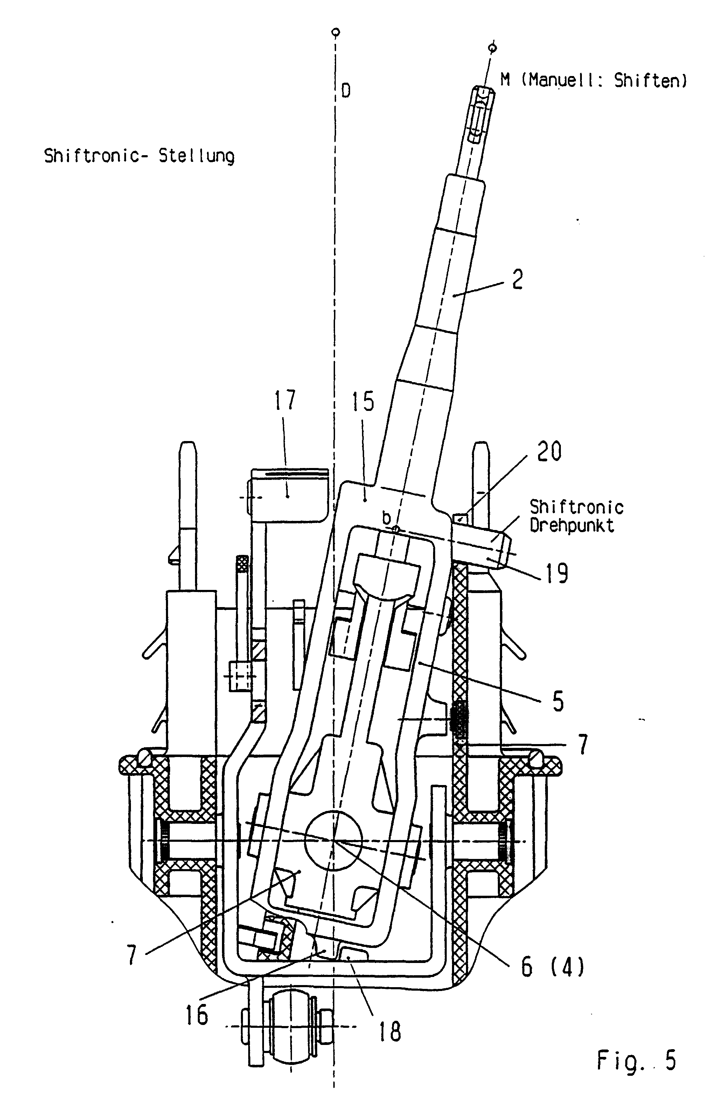

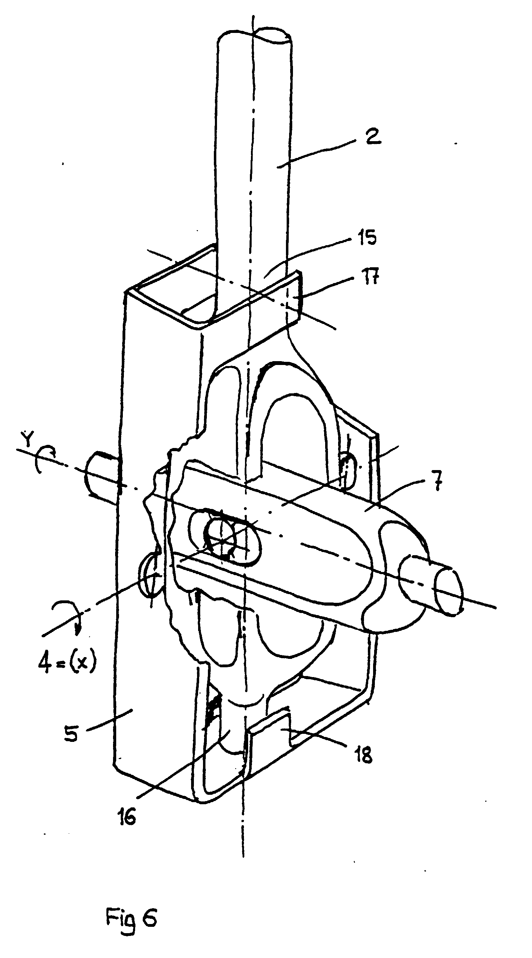

Bei den Ausführungsbeispielen in den Figuren 4, 5 und 6 ist ein U-förmiger Bügel als Zwischenteil 5 mit den Schenkeln nach oben gerichtet angeordnet, so daß das Zwischenteil 5 nach oben offen ist. In dieses nach oben offene Zwischenteil 5 ist das untere Ende des Wählhebels 2 mit einer ebenfalls bügelförmigen Ausbildung eingesetzt, so daß die universalgelenkige Lagerung des Wählhebels 2 mit einem Kreuzstück 7 innerhalb des bügelförmigen Bereiches am unteren Ende des Wählhebels 2 untergebracht ist. Bei dieser Anordnung weist der Wählhebel 2 im oberen und im unteren Bereich des Zwischenteiles 5 wenigstens je einen Mitnehmer 15 und 16 auf, der in der senkrechten Mittellage des Wählhebels 2 in Halteelemente 17 und 18 am Zwischenstück in beiden Wählrichtungen wirksam querbeweglich eingreift. Außerdem ist an dem Wählhebel 2 bzw. an seinem bügelförmig ausgebildeten Ende, etwa in Höhe der Schaltkulisse in dem Gehäuse,ein Zapfen 19 angeordnet, der in der dem manuellen, schrittweisen Schalten zugeordneten Schaltnebenstellung M in eine Ausnehmung 20 des Gehäuses 1 eingreift und somit den Drehpunkt bzw. die Schwenkachse des Schalthebels in der Schaltnebenstellung M beim schrittweisen manuellen Schalten bildet. In der diesem manuellen Schalten zugeordneten Kipplage befinden sich die Mitnehmer 15 und 16 nicht im Eingriff mit den Halteelementen 17 und 18, so daß der Wählhebel 2 gegenüber dem Zwischenteil 5 um die Achse des Zapfens 19 schwenkbar ist, um die zuvor zu den Ausführungsbeispielen der Figuren 1 und 2 beschriebene manuelle Schaltung zu ermöglichen. Vereinfacht ist eine solche Ausbildung in der Figur 6 perspektivisch dargestellt. In diesem Falle greift ein durchgehender Wählhebel 2, welcher um die Achse 4 begrenzt universalgelenkig in dem Zwischenteil 5 und dem Gehäuse 1 gelagert ist, in der Mittellage oberhalb der Gelenkachse 4 unmittelbar zwischen Halteelemente 17 des Zwischenteiles 5 und unterhalb der Gelenkachse zwischen Halteelemente 18 des Zwischenteiles 5. Bei einer Kippbewegung wird der Wählhebel 2 von den Halteelementen 17 und 18 freigegeben, so daß er für die manuelle schrittweise Schaltung um die X'-Achse schwenkbar ist.

### BEZUGSZEICHENLISTE:

- 1: Gehäuse
- 2: Wählhebel
- 3: Schaltkulisse
- 4: Querachse
- 5: Zwischenteil
- 6: Schwenkachse
- 7: Kreuzstück
- 8: Schlitz
- 9: Kreuzschlitz
- 10: Gleitstein
- 11: Seilzug
- 12: Bauteil
- 13: Schenkelfeder
- 14: Elektromagnet
- 15: Mitnehmer
- 16: Mitnehmer
- 17: Halteelement
- 18: Halteelement
- 19: Zapfen
- 20: Ausnehmung

P, R, N, D und M - Schaltstellungen

## Patentansprüche

1. Schaltvorrichtung für ein automatisches Getriebe eines Kraftfahrzeugs, bei der ein Wählhebel innerhalb einer Schaltkulisse um eine tiefer als diese liegende Wählachse schwenkbar ist, und in den Schaltstellungen (P, R, N, D) durch quer zur Längsrichtung der Schaltkulisse wirksame Federkräfte gegen seitlich zueinander versetzt liegende Rastungen, die den Schaltstellungen zugeordnet sind, gehalten ist und in einer dem automatischen Schalten zugeordneten Schaltstellung zur schrittweisen Schaltung der Gänge des Getriebes mittels elektrischer Schalter manuell schwenkbar ist, dadurch gekennzeichnet, daß die Wählachse (4) des Wählhebels (2) universalgelenkig in einem Zwischenteil (5) gelagert und dieses Zwischenteil (5) in der Wählachse (4) an einem karosseriefesten Gehäuse (1) schwenkbar gelagert ist, wobei der Wählhebel (2) in einer Nebenschaltstellung (M) der dem automatischen Schalten zugeordneten Schaltstellung (D) um ein höher als die Wählachse (4) liegendes Zapfen (19) in Richtung der Wählbewegung zur Überbrückung von Schaltkontakten für die schrittweise Schaltung der Gänge des Getriebes manuell relativ zum Zwischenteil (5) schwenkbar ist.

2. Schaltvorrichtung nach Anspruch 1, dadurch gekennzeichnet, daß das Zwischenteil (5) in der dem manuellen, schrittweisen Schalten zugeordneten Nebenschaltstellung (M) mittels eines Elektromagneten (14) schwenkbeweglich arretiert ist und mit seinem unteren Ende in einen Gleitstein (10) des Zwischenteils (5) quer zur Richtung der Wählbewegung beweglich eingreift.

3. Schaltvorrichtung nach den Ansprüchen 1 und 2, dadurch gekennzeichnet, daß ein Zwischenteil (5) aus einem Bügel mit seinen Schenkeln um die Wählachse (4) schwenkbar an einem festen Gehäuse (1) gelagert ist und der einen sich quer zur Wählbewegung erstreckenden Schlitz (8) im oberen Steg des Bügels durchgreifende Wählhebel (2) mit seinem unteren Ende unterhalb der Wählachse (4) in einen sich quer zur Wählbewegung erstreckenden Schlitz (9) eines mit dem Bügel verbundenen Gleitsteines (10) eingreift.

4. Schaltvorrichtung nach den Ansprüchen 1 bis 3, dadurch gekennzeichnet, daß der Wählhebel (2) oberhalb der Wählachse (4) einen Schlitz (8) im Bügel (5) in Richtung der Wählbewegung beweglich durchsetzt und in der Nebenschaltstellung (M) der dem automatischen Schalten zugeordneten Schaltstellung (D) mit seinem unteren Ende in einem Querschlitz (9) des Gleitsteines (10) gegenüber dem Bügel (5) beweglich geführt ist.

5. Schaltvorrichtung nach Anspruch 1, dadurch gekennzeichnet, daß das Zwischenteil (5) bzw. der Wählhebel (2) in der dem manuellen, schrittweisen Schalten zugeordneten Schaltnebenstellung (M) mit einem Zapfen (19) in eine Gehäuseausnehmung (20) quer zur Längsrichtung der Schaltkulisse einschwenkbar und dadurch arretiert ist.

6. Schaltvorrichtung nach Anspruch 5, dadurch gekennzeichnet, daß der Wählhebel (2) im oberen und im unteren Bereich des Zwischenteiles (5) wenigstens einen Mitnehmer (15,16) aufweist, der in der senkrechten Mittellage in ein Halteelement (17,18) in beiden Wählrichtungen wirksam querbeweglich eingreift.

7. Schaltvorrichtung nach einem der Ansprüche 1 bis 6, dadurch gekennzeichnet, daß die universalgelenkige Lagerung des Wählhebels (2) zwischen den Schenkeln eines U-förmigen Bereiches des Wählhebels (2) und dieser Bereich zwischen den Schenkeln eines bügelförmigen Zwischenteils (5) angeordnet ist.

8. Schaltvorrichtung nach Anspruch 7, dadurch gekennzeichnet, daß der quer zur Wählgasse kippbeweglich gelagerte Wählhebel (2) oberhalb der Kippachse (4) und unterhalb dieser Kippachse (4) einen Mitnehmer (15,16) aufweist, der in der dem manuellen Schalten zugeordneten Kipplage freibeweglich und in der vertikalen Mittellage querbeweglich in Halteelemente (17,18) am Zwischenteil (5) eingreift.

## Claims

1. Shift device for an automatic transmission of a motor vehicle, wherein a selector lever is capable of swivelling inside a gear shifting gate about a selection axis lying lower than the latter, and in the shift positions (P, R, N, D) is held by means of spring forces acting at right angles to the longitudinal direction of the gear shifting gate against mutually laterally offset detent devices associated with the shift positions and in a shift position associated with automatic gear shifting is capable of being manually swivelled for successive shifting of the gears of the transmission by means of electrical switches, characterized in that the selection axis (4) of the selector lever (2) is mounted cardanically in an intermediate part (5) and said intermediate part (5) in the selection axis (4) is pivotally supported against a body-fixed housing (1), wherein the selector lever (2) in a secondary shift position (M) of the shift position (D) associated with automatic gear shifting is capable of being swivelled manually relative to the intermediate part (5) about a journal (19) situated higher than the selection axis (4) in the direction of the selection motion in order to bridge switching contacts for successive shifting of the gears of the transmission.

2. Shift device according to claim 1, characterized in that the intermediate part (5) in the secondary shift position (M) associated with manual successive gear shifting is arrested in terms of its swivelling motion by means of an electromagnet (14) and engages with its bottom end into a sliding block (10) of the intermediate part (5) so as to be movable at right angles to the direction of the selection motion.

3. Shift device according to claims 1 and 2, characterized in that an intermediate part (5) comprising a bow is supported by its limbs on a fixed housing (1) so as to be capable of swivelling about the selection axis (4) and the selector lever (2), which penetrates a slot (8) disposed in the upper web of the bow and extending at right angles to the selection motion, engages with its bottom end below the selection axis (4) into a slot (9), extending at right angles to the selection motion, of a sliding block (10) connected to the bow.

4. Shift device according to claims 1 to 3, characterized in that the selector lever (2) above the selection axis (4) penetrates a slot (8) in the bow (5) so as to be movable in the direction of the selection motion and, in the secondary shift position (M) of the shift position (D) associated with automatic gear shifting, is guided by its bottom end in a transverse slot (9) of the sliding block (10) so as to be movable relative to the bow (5).

5. Shift device according to claim 1, characterized in that the intermediate part (5) and/or the selector lever (2) in the secondary shift position (M) associated with manual successive gear shifting is capable of swivelling with a journal (19) at right angles to the longitudinal direction of the gear shifting gate into a housing recess (20) and is thereby arrested.

6. Shift device according to claim 5, characterized in that the selector lever (2) in the top and in the bottom region of the intermediate part (5) comprises at least one driver (15, 16) which, in the vertical middle position, engages into a retaining element (17, 18) so as to be effectively movable transversely in both selection directions.

7. Shift device according to one of claims 1 to 6, characterized in that the cardanic mounting of the selector lever (2) is disposed between the limbs of a U-shaped region of the selector lever (2) and said region is disposed between the limbs of a bow-shaped intermediate part (5).

8. Shift device according to claim 7, characterized in that the selector lever (2), which is supported so as to be tiltable at right angles to the selection lane, above the tilting axis (4) and below said tilting axis (4) comprises a driver (15, 16) which engages, in the tilted position associated with manual gear shifting, in a freely movable manner and, in the vertical middle position, in a transversely movable manner into retaining elements (17, 18) on the intermediate part (5).

## Revendications

1. Dispositif de commutation pour une transmission automatique d'un véhicule à moteur, dans lequel un levier de sélection peut osciller dans une coulisse de commutation autour d'un axe de sélection situé plus profondément que celle-ci, et est maintenu dans les positions de commutation (P, R, N, D) au moyen de forces élastiques agissant perpendiculairement au sens de la longueur de la coulisse de commutation contre des crans situés les uns à côté des autres qui sont associés aux positions de commutation, et peut osciller manuellement dans l'une des positions de commutation associées à la commutation automatique pour une commutation pas à pas des rapports de la transmission au moyen d'un commutateur électrique, caractérisé en ce que l'axe (4) de sélection du levier (2) de sélection est logé à articulation universelle dans une pièce intermédiaire (5) et que cette pièce intermédiaire (5) est logée dans une position oscillante dans l'axe (4) de sélection à un boîtier (1) solidaire de la carrosserie, et ainsi le levier (2) de sélection peut osciller par rapport à la pièce intermédiaire (5), dans une position secondaire (M) de commutation de la position (D) de commutation associée à la commutation automatique, autour d'un pivot (19) situé plus haut que l'axe (4) de sélection dans le sens du mouvement de sélection, pour relier des contacts de commutation pour la commutation manuelle pas à pas des rapports de la transmission.

2. Dispositif de commutation selon la revendication 1, caractérisé en ce que la pièce intermédiaire (5) est bloquée par un électroaimant (14) de manière à pouvoir osciller dans la position secondaire (M) de commutation associée à la commutation manuelle pas à pas et pénètre en se déplaçant à son extrémité inférieure dans un coulisseau (10) de la pièce intermédiaire perpendiculairement à la direction du déplacement de sélection.

3. Dispositif de commutation selon la revendication 1 ou 2, caractérisé en ce qu'une pièce intermédiaire (5) formée d'un étrier avec ses côtés est logée dans un boîtier fixe (1) de manière à osciller autour de l'axe (4) de sélection et que le levier (2) de sélection traversant une fente (8) s'étendant perpendiculairement au déplacement de sélection dans l'entretoise supérieure de l'étrier pénètre, à son extrémité inférieure sous l'axe (4) de sélection, dans une fente (9) s'étendant perpendiculairement au déplacement de sélection d'un coulisseau (10) relié à l'étrier.

4. Dispositif de commutation selon une des revendications 1 à 3, caractérisé en ce que le levier (2) de sélection traverse, en se déplaçant au-dessus de l'axe (4) de sélection, une fente (8) dans l'étrier (5) en direction du déplacement de sélection et, dans la position secondaire (M) de commutation de la position (D) de commutation associée à la commutation automatique, est guidé pour se déplacer par rapport à l'étrier (5) à son extrémité inférieure dans une fente transversale (9) du coulisseau (10).

5. Dispositif de commutation selon la revendication 1, caractérisé en ce que la pièce intermédiaire (5), ou le levier (2) de sélection, peut osciller dans la position secondaire (M) associée à la commutation manuelle pas à pas, avec un pivot (19) dans un évidement (20) du boîtier perpendiculairement au sens de la longueur de la coulisse de commutation et est ainsi arrêtée.

6. Dispositif de commutation selon la revendication 5, caractérisé en ce que le levier (2) de sélection dans les domaines supérieur et inférieur de la pièce intermédiaire (5) comporte au moins un ergot (15, 16) qui, dans la position médiane verticale, pénètre en se déplaçant transversalement dans une butée (17, 18) dans les deux directions de sélection.

7. Dispositif de commutation selon une des revendications 1 à 6, caractérisé en ce que le logement à articulation universelle du levier (2) de sélection est disposé entre les côtés d'un domaine en forme de U du levier (2) de sélection, et que ce domaine est disposé entre les côtés d'une pièce intermédiaire (5) en forme d'étrier.

8. Dispositif de commutation selon la revendication 7, caractérisé en ce que le levier (2) de sélection logé pour basculer perpendiculairement à la rainure de sélection comporte au-dessus de l'axe (4) de basculement et au-dessous de cet axe (4) de basculement un ergot (15, 16) qui, dans la position de basculement associée à la commutation manuelle, pénètre en se déplaçant librement et, dans la position médiane verticale, pénètre en se déplacement transversalement, dans des butées (17, 18) sur la pièce intermédiaire (5).
